# EUROPEAN PATENT SPECIFICATION

(11) **EP 3 299 270 B1**
(45) Date of publication and mention of the grant of the patent: **27.05.2020**
(21) Application number: 17188236.8
(22) Date of filing: 29.08.2017
(51) Int. Cl.: B62K 11/10

(54) **VEHICLE WITH A STRUCTURE FOR PROTECTING A SENSOR**
ANORDNUNG ZUM SCHUTZ EINES SENSORS
ARRANGEMENT POUR PROTECTION D'UN CAPTEUR

(30) Priority: 26.09.2016 JP 2016187587
(43) Date of publication of application: 28.03.2018
(73) Proprietor: HONDA MOTOR CO., LTD., Tokyo 107-8556 (JP)
(72) Inventor: Tomioka, Yusuke, Saitama 351-0193 (JP)
(74) Representative: Kiwit, Benedikt

(56) References cited:
- EP-A1- 1 892 165
- EP-A1- 2 479 093
- EP-A2- 1 088 751
- JP-A- 2008 024 163
- JP-A- 2010 076 604
- JP-A- 2013 068 231

## Description

The present invention relates to a vehicle with a structure or device for protecting a drive wheel speed sensor mounted on a power unit from external forces.

There is a power unit mounted on a vehicle wherein a drive wheel is fitted over and supported on a rear axle that is rotatably supported on and projects laterally from a rear portion of a power transmitting case extending rearward from a crankcase of an internal combustion engine. In such a power unit, a drive wheel speed detection sensor is protrusively provided on an upper portion of the rear axle on the power transmitting case.

Patent Document 1 discloses an example of structure for protecting such a drive wheel speed detection sensor protrusively provided on a power unit from external forces.

Patent Document 1: Japanese Patent No. 5185042
Patent Document 2: Japanese Patent No. 2008-24163

According to Patent Document 1, in order to protect the drive wheel speed detection sensor from external forces from behind, a rear protective wall is protrusively formed on the power transmitting case at a position behind the drive wheel speed detection sensor.

The rear protective wall provided behind the drive wheel speed detection sensor protects the speed detection sensor from external forces caused by impact of foreign matter, etc. from behind.

According to Patent Document 1, the rear protective wall solely for protective purpose is specially formed on the power transmitting case in order to protect the drive wheel speed detection sensor from external forces from behind.

Therefore, the number of parts used increases, making the cost higher and increasing the vehicle body weight.

The Patent Document 2 shows a similar arrangement with the features of the preamble of claim 1.

The present invention has been made in view of the above problems. It is an object of the present invention to provide an inexpensive structure or device for protecting a drive wheel speed detection sensor from external forces from behind, using existing components, thereby reducing the number of parts used and avoiding an increase in the weight of a vehicle body.

In order to achieve the above object, there is provided in accordance with the present invention a vehicle with a structure for protecting a drive wheel speed sensor for a power unit mounted on said vehicle in which a power transmitting case extending rearward from a crankcase of an internal combustion engine and a power transmitting case cover house therebetween a continuously variable transmission, and a drive wheel is fitted on a rear axle driven through the continuously variable transmission and rotatably supported on a rear portion of the power transmitting case, so as to project sideways, wherein the crankcase has a front portion swingably supported on a vehicle body frame of the vehicle, a rear cushion is interposed between a support bracket projecting on a rear portion of the power transmitting case and a rear portion of the vehicle body frame, and a drive wheel speed detection sensor for detecting rotational speed of the drive wheel is inserted in and projects from a portion of the power transmitting case above the rear axle: characterized in that the support bracket is positioned to project in a position to cover at least a part of the drive wheel speed detection sensor from behind as the vehicle is viewed in rear elevation.

With the above arrangement, the support bracket projecting on the rear portion of the power transmitting case is provided in the position to cover at least a part of the drive wheel speed detection sensor from behind which is inserted in and projects from the portion of the power transmitting case above the rear axle as the vehicle is viewed in rear elevation, whereby the support bracket protects the drive wheel speed detection sensor from external forces caused by impact of foreign matter, etc. from behind.

As the support bracket for supporting the rear cushion is used to protect the drive wheel speed detection sensor from external forces from behind, the number of parts used is reduced, making the cost of the structure low and preventing the vehicle body from increasing its weight.

In a preferred embodiment of the invention, the support bracket has a side portion adjacent to the drive wheel, and the side portion is positioned to cover a part of the drive wheel speed detection sensor as the vehicle is viewed in rear elevation.

With this arrangement, as the side portion near the drive wheel of the support bracket covers a part of the drive wheel speed detection sensor as the vehicle is viewed in rear elevation, the drive wheel speed detection sensor is protected by the support bracket from impact of foreign matter, etc. from obliquely behind the support bracket on the vehicle.

In a preferred embodiment of the invention, the support bracket covers at least a part of the drive wheel speed detection sensor sideways as the vehicle is viewed in side elevation.

With this arrangement, as the support bracket covers at least a part of the drive wheel speed detection sensor sideways, the drive wheel speed detection sensor is protected by the support bracket from impact of foreign matter, etc. sideways with respect to the vehicle.

In a further preferred embodiment of the invention, the support bracket includes a front base and a rear base on the power transmitting case, spaced from each other in forward and rearward directions of the vehicle, a tip-end pivot support by which the rear cushion is pivotally supported, and a front support post and a rear support post extending respectively from the front base and the rear base to the tip-end pivot support.

With this arrangement, because the support bracket includes the front base and the rear base that are spaced from each other in the forward and rearward directions of the vehicle near the power transmitting case, the tip-end pivot support by which the rear cushion is pivotally supported, and the front support post and the rear support post that extend respectively from the front base and the rear base to the tip-end pivot support, the support bracket is able to reduce shearing loads applied thereto with the front support post and the rear support post that make up sides of a substantially triangular shape, firmly bearing spring forces from the rear cushion, and is made lightweight by a lightened wall or space between the front support post and the rear support post.

In an embodiment of the invention, the support bracket projects obliquely rearward and upward from a rear curved portion of the power transmitting case; and the rear support post interconnects the rear base on the rear curved portion of the power transmitting case and the tip-end pivot support through a bent portion bent rearward.

With this arrangement, inasmuch as the support bracket projects obliquely rearward and upward from the rear curved portion of the power transmitting case, and the rear support post interconnects the rear base on the rear curved portion of the power transmitting case and the tip-end pivot support through the bent portion that is bent rearward, the support bracket is positioned as rearward as possible while keeping low shearing loads applied thereto, increasing the distance between itself and the drive wheel speed detection sensor positioned in front thereof. Even if the support bracket is deformed by impact of foreign matter from behind, it does not adversely affect the drive wheel speed detection sensor.

In a preferred embodiment of the invention, an air cleaner is disposed above the power transmitting case with a gap therebetween; and the gap between the power transmitting case and the air cleaner is covered sideways with a protective cover as the vehicle is viewed in side elevation.

With this arrangement, since the air cleaner is disposed above the power transmitting case, and the gap between the power transmitting case and the air cleaner is covered sideways with the protective cover, the drive wheel speed detection sensor and a sensor harness that are visible sideways between the power transmitting case and the air cleaner are covered sideways by the protective cover. The protective cover prevents foreign matter from entering sideways between the power transmitting case and the air cleaner, thereby protecting the drive wheel speed detection sensor and the sensor harness.

In a further preferred embodiment of the invention, the air cleaner bulges over the drive wheel speed detection sensor.

With this arrangement, since the air cleaner bulges over the drive wheel speed detection sensor, the air cleaner protects the drive wheel speed detection sensor from the impact of foreign matter and rainwater from above.

According to the present invention, since the support bracket projecting on the rear portion of the power transmitting case projects in the position to cover at least a part of the drive wheel speed detection sensor from behind which is inserted in and projects from the portion of the power transmitting case above the rear axle as the vehicle is viewed in rear elevation, the support bracket protects the drive wheel speed detection sensor from external forces caused by impact of foreign matter, etc. from behind.

As the support bracket for supporting the rear cushion is used to protect the drive wheel speed detection sensor from external forces from behind, the number of parts used is reduced, making the cost of the structure low and preventing the vehicle body from increasing its weight.

FIG. 1 is a side elevational view depicting a motorcycle in its entirety, having mounted thereon a structure or device for protecting a drive wheel speed detection sensor according to an embodiment of the present invention;
FIG. 2 is an enlarged left-hand side elevational view of a power unit and its periphery;
FIG. 3 is a cross-sectional view taken along line III-III of FIG. 2;
FIG. 4 is a perspective view of a rear vehicle portion with an air cleaner being omitted from illustration;
FIG. 5 is a fragmentary rear elevational view of the motorcycle;
FIG. 6 is an enlarged left-hand side elevational view of the power unit and its periphery with the air cleaner and a protective cover being omitted from illustration; and
FIG. 7 is an enlarged left-hand side elevational view of the power unit and its periphery with the protective cover being omitted from illustration.

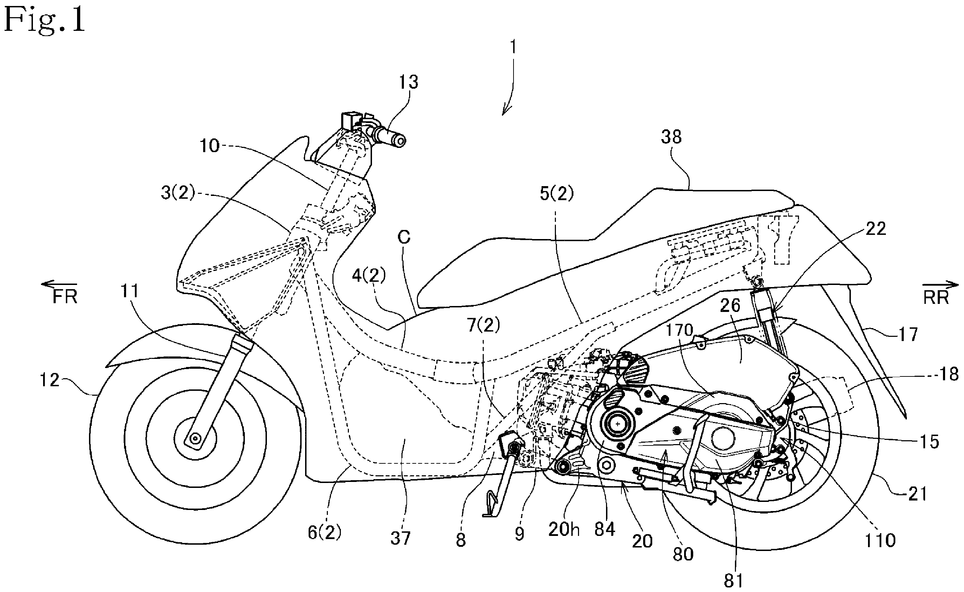

An embodiment of the present invention will be described below with reference to FIGS. 1 through 7.

FIG. 1 is a side elevational view of a motorcycle 1 as a saddle-type vehicle, having mounted thereon a structure or device for protecting a drive wheel speed detection sensor according to the embodiment of the present invention.

Directions such as forward, rearward, leftward, and rightward directions referred to in the description that follows will be in accord with normal standards for the motorcycle 1 according to the present embodiment whose direction of traveling straight ahead is referred to as a forward direction. In the drawings, the arrow FR represents a forward direction, the arrow RR a rearward direction, the arrow LH a leftward direction, and the arrow RH a rightward direction.

As depicted in FIG. 1, the motorcycle 1 has a vehicle body frame 2 as a vehicle body skeleton that is covered with a vehicle body cover C and indicated by the broken lines. The vehicle body frame 2 includes a head pipe 3 in a front vehicle body portion, a main frame 4 extending rearward and downward from the head pipe 3, and a pair of left and right seat rails 5 branched to the left and right from the rear end of the main frame 4 and extending rearwardly and upwardly.

In addition to the main frame 4, a pair of left and right down tubes 6 extend downward from the head pipe 3, are bent to extend rearward in a floor area, then bent upward in a rear portion of the floor area, and are connected to front end portions of the seat rails 5.

The seat rails 5 are supported by respective back stays 7 that interconnect the bent portions of the down tubes 6 in the rear portion of the floor area and central portions of the seat rails 5 in forward and rearward directions.

In a front portion of the vehicle body frame 2 that is generally constructed as described above, a steering column 10 is angularly movably inserted through the head pipe 3. The steering column 10 has a lower end integrally coupled to a front fork 11 on which a front wheel 12 is rotatably supported by an axle, and an upper end from which left and right handlebars 13 extend upwardly while spreading to the left and right.

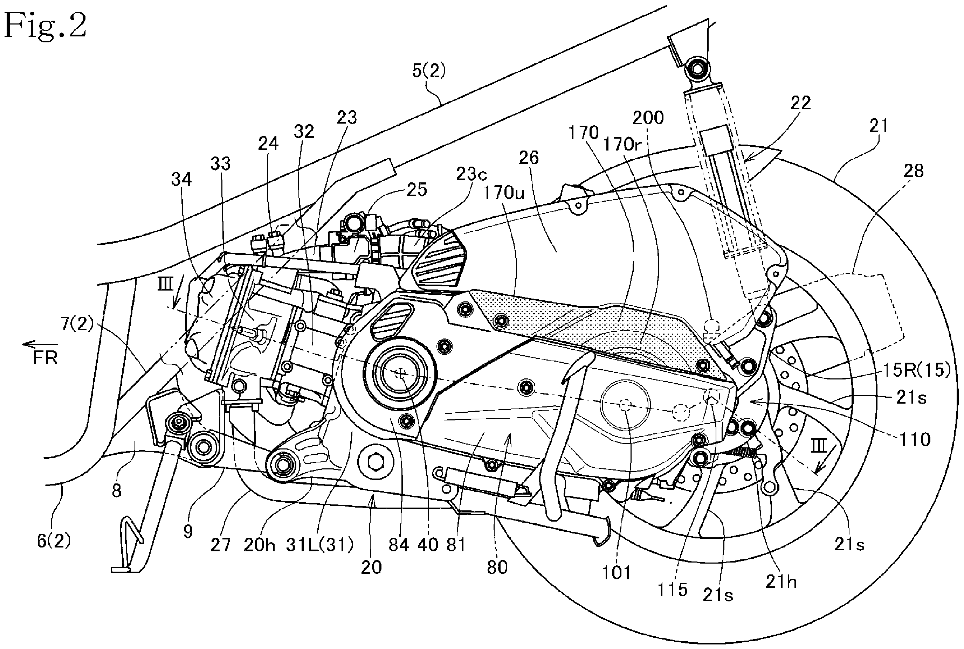

As depicted in FIG. 1 and also FIG. 2 which is a left-hand side elevational view of a power unit and its periphery, brackets 8 project rearward from the bent portions of the down tubes 6 in the rear portion of the floor area and downward from the front end portions of the back stays 7. A swingable power unit 20 has a hanger bracket 20h supported by and swingably coupled to the tip ends of the brackets 8 through links 9.

The power unit 20 includes in its front portion a single-cylinder four-stroke water-cooled internal combustion engine 30 having a cylinder block 32, a cylinder head 33, and a cylinder head cover 34 successively stacked forward on and protruding from a crankcase 31. The internal combustion engine 30 is oriented in such a posture that its cylinder axis is inclined forward through a large angle nearly to a horizontal attitude.

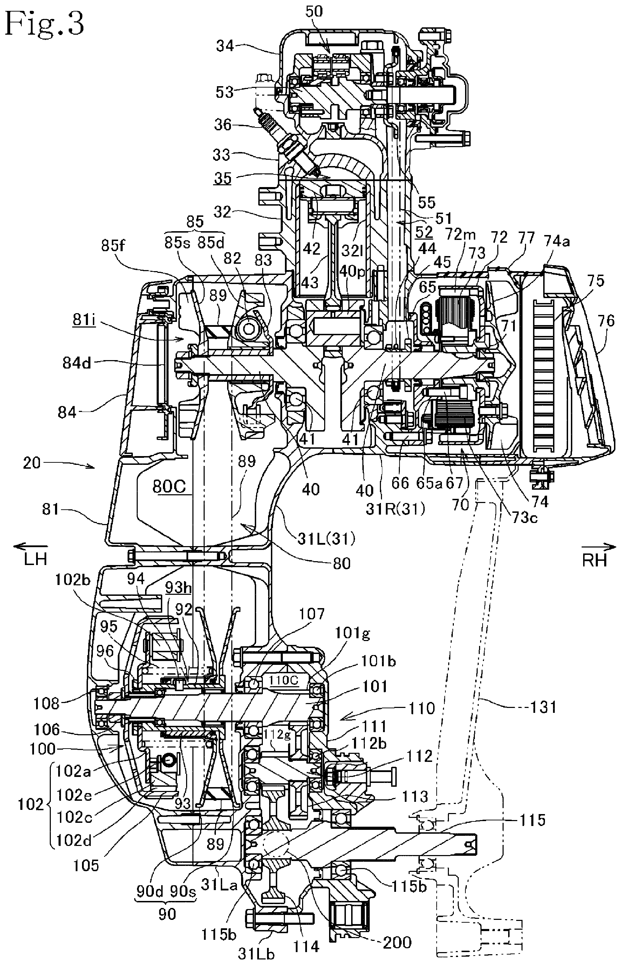

The power unit 20 also includes a belt-type continuously variable transmission 80 extending rearward from the internal combustion engine 30. The belt-type continuously variable transmission 80 has a speed reducer gear mechanism 110 in its rear portion which has a rear axle 115 as an output shaft on which a rear wheel 21 is mounted (see FIGS. 2 and 3).

As shown in FIG.3, The rear axle 115 has a right end rotatably supported by the rear end of a right rear fork member 131 extending rearward from a right side portion of the crankcase 31.

A rear fender 17 shown in FIG.1 projects rearward and downward from the rear end of the vehicle body cover C, and covers an obliquely rearward and upward region over the rear wheel 21.

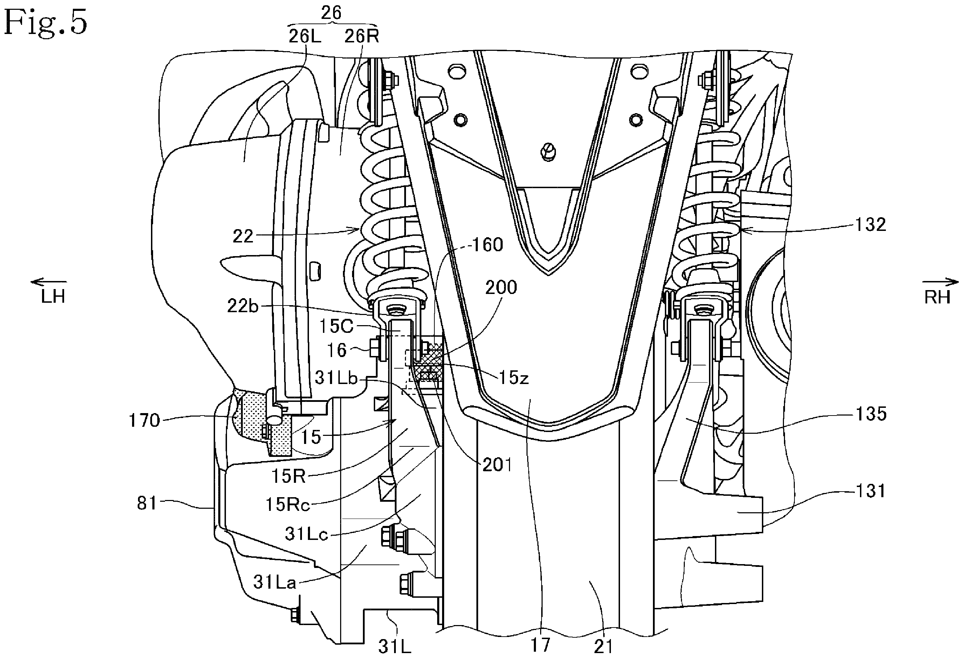

Rear cushions 22 and 132 shown in FIGS.2 and 5 are interposed between support brackets 15 and 135 vertically mounted on the rear portion of the power unit 20 which includes the speed reducer gear mechanism 110 and the rear end of the right rear fork member 131, and a rear portion of the main frame 4.

As depicted in FIG. 2 which is a side elevational view of the power unit 20, an intake pipe 23 extends, in an upper portion of the power unit 20, from an upper portion of the cylinder head 33 that is inclined forward through a large angle and is bent rearward and connected to a throttle body 25 positioned above the cylinder block 32. The throttle body 25 is coupled to an air cleaner 26 disposed therebehind through a joint pipe 23c.

An injector 24 for injecting fuel into an intake port in the cylinder head 33 is mounted on the intake pipe 23.

An exhaust pipe 27 extends downward from a lower portion of the cylinder head 33, is bent rearward and deflected to the right, then extends rearward, and is connected to a muffler 28 (see FIG.2) on the right side of the rear wheel 21.

As shown in FIG.1, a fuel tank 37 is supported on the main frame 4 and the left and right down tubes 6, and a seat 38 is supported on the vehicle body cover C above the seat rails 5.

FIG. 3 is a cross-sectional view taken along line III-III of FIG. 2, depicting the power unit 20.

As shown in FIG. 3, the internal combustion engine 30 has a piston 42 reciprocally movable in a cylinder liner 32l of the cylinder block 32 and a crankshaft 40 having a crankpin 40p connected to the piston 42 by a connecting rod 43.

The crankcase 31 includes a left crankcase member 31L and a right crankcase member 31R that are separably joined to each other. The right crankcase member 31R serves as one half of a crankcase body, whereas the left crankcase member 31L has a front portion serving as the other half of the crankcase body and a rear portion bulging rearward from the front portion, providing a power transmitting case that houses the belt-type continuously variable transmission 80 which is elongate in the forward and rearward directions or longitudinal directions.

The power transmitting case, i.e., the left crankcase member 31L, has a longitudinally elongate left open side covered with a power transmitting case cover 81, and defines therein a transmission chamber 80C that houses the belt-type continuously variable transmission 80 therein. The power transmitting case 31L has a rear portion having a right open side covered with a speed reducer gear cover 111 and defining therein a speed reducer gear chamber 110C that houses the speed reducer gear mechanism 110 therein.

The power transmitting case cover 81 that covers the left open side of the power transmission case 31L has a large cooling air inlet hole 81i defined in a front portion thereof over a cooling fan 85f on a fixed pulley cone 85s of a drive pulley 85. The left side of the cooling air inlet hole 81i is covered with a side duct cover 84 that includes a duct cover 84d covering the peripheral edge of the cooling air inlet hole 81i.

Still referring to FIG. 3, in the crankcase 31 that is made up of the right crankcase member 31R and the front portion of the left crankcase member 31L combined together, the crankshaft 40 is rotatably supported on side walls of the left and right crankcase members 31L and 31R by respective main bearings 41 that serve as left and right roller bearings.

The crankshaft 40 has two outer shaft portions extending horizontally to the left and right. Of these outer shaft portions, the right outer shaft portion supports a cam chain drive sprocket 44 and an oil pump drive gear 45 corotatably fitted thereover and an alternating current (AC) generator 70 mounted on the right end of the right outer shaft. The left outer shaft portion supports thereon a centrifugal weight 82 and the drive pulley 85 of the belt-type continuously variable transmission 80.

The four-cycle internal combustion engine 30 incorporates a single overhead camshaft (SOHC)-type valve system that includes a valve train or valve operating mechanism 50 disposed in the cylinder head cover 34. A cam chain 51 for transmitting power to the valve operating mechanism 50 is trained around a camshaft 53 and the crankshaft 40. The cam chain 51 is housed in a cam chain chamber 52 that is defined in the right crankcase 31R, the cylinder block 32, and the cylinder head 33 (see FIG. 3).

Specifically, the cam chain 51 housed in the cam chain chamber 52 is trained around a cam chain driven sprocket 55 fitted over the right end of the camshaft 53 that extends horizontally to the left and right and the cam chain drive sprocket 44 fitted over the crankshaft 40.

As depicted in FIG. 3, the cam chain chamber 52 in the right crankcase member 31R is defined by a side wall thereof having a large opening that is closed by a partition 65 fastened to the side wall by bolts 66 threaded from the right. The partition 65 has a tubular portion 65a through which the crankshaft 40 extends.

The AC generator 70 has a cup-shaped outer rotor 72 fixed by an AC generator (ACG) boss 71 to a right end portion of the crankshaft 40 extending through the tubular portion 65a of the partition 65, and an inner stator 73 fixed to the tubular portion 65a of the partition 65 by bolts 67. The inner stator 73 has stator coils 73c wound inside of magnets 72m arrayed circumferentially on an inner circumferential surface of the outer rotor 72.

The AC generator 70 has a cup-shaped outer rotor 72 fixed by an ACG boss 71 to a right end portion of the crankshaft 40 extending through the tubular portion 65a of the partition 65, and an inner stator 73 fixed to the tubular portion 65a of the partition 65 by bolts 67. The inner stator 73 has stator coils 73c wound inside of magnets 72m arrayed circumferentially on an inner circumferential surface of the outer rotor 72.

The outer rotor 72 has a right side surface on which a centrally bulging disk-shaped fan base 74a is mounted. A radiator fan 74 that projects to the right is disposed on the fan base 74a.

The outer rotor 72 of the AC generator 70 has an outer circumferential surface essentially surrounded by a tubular circumferential wall extending to the right from the side wall of the right crankcase member 31R. The radiator fan 74 has an outer circumferential edge surrounded by a fan cover 77. A radiator 75 is disposed closely on the right side of the radiator fan 74, and covered with a louvred radiator cover 76.

The drive pulley 85, which is mounted on the left outer shaft of the crankshaft 40, in the belt-type continuously variable transmission 80 on the left side of the power unit 20, includes the fixed pulley cone 85s that is fitted over the crankshaft 40 near its left end and a movable pulley cone 85d disposed on the right side of the fixed pulley cone 85s in facing relation thereto and axially slidable on the crankshaft 40. The centrifugal weight 82 is radially movably sandwiched between the movable pulley cone 85d and a guide plate 83 that is fixed to the crankshaft 40 behind the movable pulley cone 85d, i.e., on the right side of the movable pulley cone 85d.

The belt-type continuously variable transmission 80 includes a driven pulley 90 rotatably supported on a driven shaft 101, serving as an input shaft of the speed reducer gear mechanism 110, rearwardly of the drive pulley 85. The driven pulley 90 includes a fixed pulley cone 90s and a movable pulley cone 90d disposed on the left side of the fixed pulley cone 90s in facing relation thereto and axially slidable on the driven shaft 101.

A fixed pulley support sleeve 92 is axially immovably and relatively rotatably supported on the driven shaft 101 by a bearing 91. The fixed pulley cone 90s has a central hole edge welded and hence integrally secured to a flange on the right end of the fixed pulley support sleeve 92.

A movable pulley support sleeve 93 is mounted on the fixed pulley support sleeve 92. The fixed pulley support sleeve 92 has a protrusive guide pin 94 movably fitted in an oblong hole 93h defined axially in the movable pulley support sleeve 93, so that the movable pulley support sleeve 93 is axially movable, but relatively nonrotatable, with respect to the fixed pulley support sleeve 92.

The movable pulley cone 90d has a central hole edge welded and hence integrally secured to a flange on the right end of the movable pulley support sleeve 93.

Therefore, the movable pulley cone 90d is rotatable in unison with the fixed pulley cone 90s, but is axially movable toward and away from the fixed pulley cone 90s.

The belt-type continuously variable transmission 80 also includes a centrifugal clutch 100 having an inner clutch member 102 that includes a support plate 102a fixed by a nut 96 to the left end of the fixed pulley support sleeve 92. A helical spring 95 is interposed between the support plate 102a and the movable pulley cone 90d for normally biasing the movable pulley cone 90d to move to the right.

The belt-type continuously variable transmission 80 transmits power with a V-belt 89 trained around the drive pulley 85 and the driven pulley 90. Depending on the rotational speed of the internal combustion engine 30, the movable pulley cone 85d is axially moved with respect to the fixed pulley cone 85s by the centrifugal weight 82 that moves radially while being guided by the guide plate 83, changing the radius of the loop of the V-belt 89 on the drive pulley 85 and also the radius of the loop of the V-belt 89 on the driven pulley 90, so that the transmission ratio is automatically changed for continuous or stepless speed changes.

The centrifugal clutch 100 includes a cup-shaped outer clutch member 105 disposed around the outer circumferential surface of the inner clutch member 102 and having a base fixed by a nut 106 to the driven shaft 101 near its left end. Clutch shoes 102d are supported on the tip ends of arms 102c swingably supported on support shafts 102b on the support plate 102a of the inner clutch member 102 and are normally urged by springs 102e to move away from the inner circumferential surface of the outer clutch member 105.

The inner clutch member 102 of the centrifugal clutch 100 rotates in unison with the driven pulley 90 of the belt-type continuously variable transmission 80 as it operates for continuous or stepless speed changes. When the rotational speed of the inner clutch member 102 exceeds a certain level, the arms 102c are swung against the forces of the springs 102e to bring the clutch shoes 102d into contact with the inner circumferential surface of the outer clutch member 105, causing the outer clutch member 105 to rotate with the inner clutch member 102 thereby to transmit power from the crankshaft 40 to the driven shaft 101.

The driven shaft 101 is rotatably supported on the power transmitting case 31L and the power transmitting case cover 81 by bearings 107 and 108, and has a right end portion inserted into the speed reducer gear chamber 110C in the rear right portion of the power transmitting case 31L and rotatably supported on the speed reducer gear cover 111 by a bearing 101b.

The speed reducer gear mechanism 110 housed in the speed reducer gear chamber 110C includes a speed reducer intermediate shaft 112 positioned between the driven shaft 101 and the rear axle 115 and oriented parallel thereto horizontally in the leftward and rightward directions. The speed reducer intermediate shaft 112 is rotatably supported on the power transmitting case 31L and the speed reducer gear cover 111 by two bearings 112b.

The speed reducer intermediate shaft 112 supports a large-diameter intermediate gear 113 fitted thereover which is held in mesh with a small-diameter gear 101g formed on the driven shaft 101.

The rear axle 115 is rotatably supported on the power transmitting case 31L and the speed reducer gear cover 111 by two left and right bearings 115b, and has a right portion projecting to the right out of the speed reducer gear cover 111. The rear axle 115 supports a large-diameter rear axle gear 114 fitted thereover near its left end at the left bearing 115b in the speed reducer gear chamber 110C. The large-diameter rear axle gear 114 is held in mesh with a small-diameter gear 112g formed on the speed reducer intermediate shaft 112.

The rear wheel 21 is fitted over the right portion of the rear axle 115 that projects to the right out of the speed reducer gear cover 111.

Rotation of the driven shaft 101 is transmitted to the rear axle 115 at a reduced rotational speed through the small-diameter gear 101g and the large-diameter intermediate gear 113 that mesh with each other and the small-diameter gear 112g and the large-diameter rear axle gear 114 that mesh with each other, rotating the rear wheel 21.

With reference to FIGS. 3 and 5, the power transmitting case, i.e., the left crankcase member 31L, has a left outer peripheral wall 31La which covers the outer side of the belt-type continuously variable transmission 80 and has an opening open to the left, and a right outer peripheral wall 31Lb which covers the rear speed reducer gear mechanism 110 and has an opening open to the right. The right outer peripheral wall 31Lb protrudes slightly rearwardly beyond the left outer peripheral wall 31La.

The rear speed reducer gear mechanism 110 of the power unit 20 has left and right portions covered respectively by the right outer peripheral wall 31Lb in the rear portion of the power transmitting case 31L and by the speed reducer gear cover 111.

The large-diameter rear axle gear 114 fitted over the rear axle 115 of the speed reducer gear mechanism 110 has its upper, lower, and rear peripheral sides covered with the right outer peripheral wall 31Lb of the power transmitting case 31L (see FIG. 3).

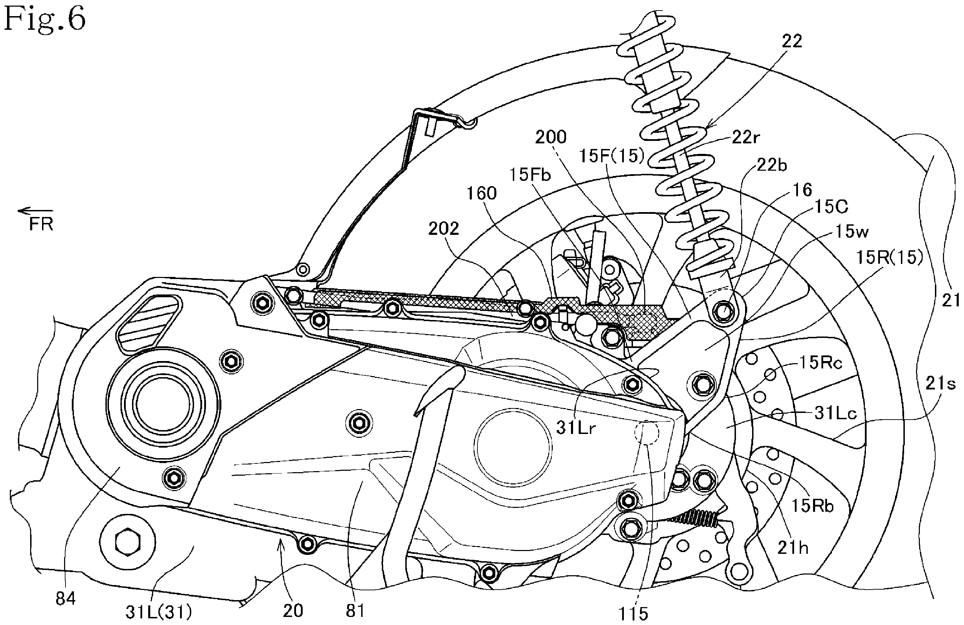

As illustrated in FIGS. 5 and 6, a drive wheel speed sensor or speed detection sensor 200 is mounted on a portion of the right outer peripheral wall 31Lb of the power transmitting case 31L above the rear axle 115.

Therefore, the drive wheel speed detection sensor 200 is disposed above the large-diameter rear axle gear 114 fitted on the rear axle 115, as will be noted from FIG. 6.

In FIG. 3, the position of the drive wheel speed detection sensor 200 is indicated by a two-dot-and-dash-line circle, and overlaps the large-diameter rear axle gear 114 as viewed from above.

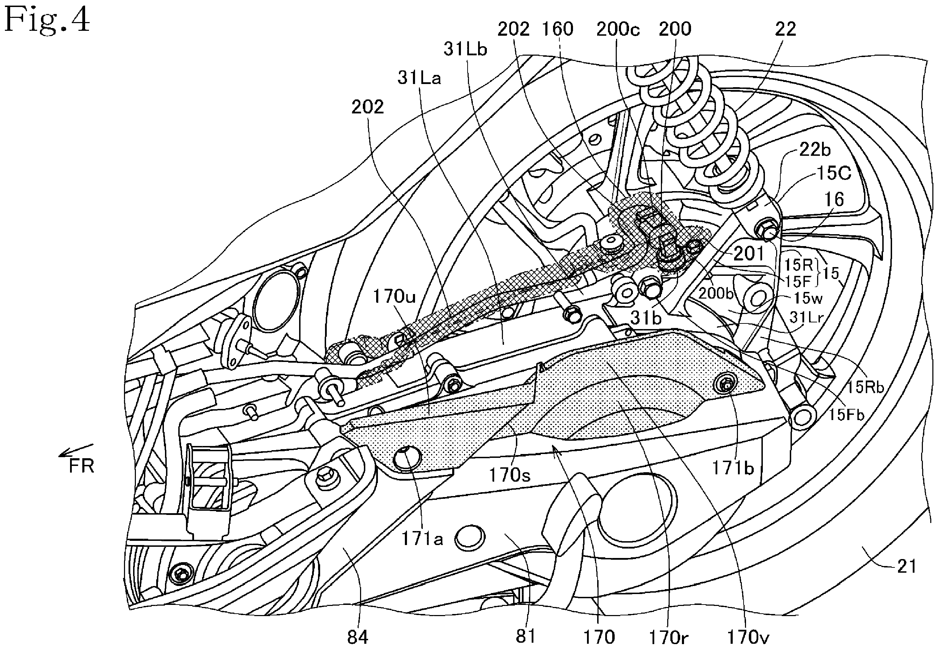

FIG. 4 is a perspective view of a rear vehicle portion with the air cleaner 26 being omitted from illustration.

As depicted in FIG. 4, the drive wheel speed detection sensor 200 is inserted in and mounted upwardly protrusively on a mount boss 31b formed on a rear upper surface of the right outer peripheral wall 31Lb.

A bracket 200b extending rearward from the base of the upwardly protrusive drive wheel speed detection sensor 200 is fastened by a bolt 201 to a portion that bulges rearward from the mount boss 31b, whereby the drive wheel speed detection sensor 200 is attached to the mount boss 31b on the rear upper surface of the right outer peripheral wall 31Lb of the power transmitting case 31L.

The speed detection sensor 200 inserted in the mount boss 31b of the right outer peripheral wall 31Lb has a detector on its lower tip end that is positioned adjacent to the teeth of the large-diameter rear axle gear 114. The drive wheel speed detection sensor 200 detects the rotational speed of the rear wheel 21, i.e., the drive wheel, by detecting the rotating teeth of the large-diameter rear axle gear 114 on the rear axle 115.

A sensor harness 202 extends to the right from a coupler 200c that projects upward from the drive wheel speed detection sensor 200. The sensor harness 202 extending from the coupler 200c turns forward of the coupler 200c, is then bent forward, and extends forwardly along the upper surface of the left outer peripheral wall 31La of the power transmitting case 31L.

The drive wheel speed detection sensor 200, the coupler 200c, and part of the sensor harness 202 are covered and protected by a protective cover 160.

The rear cushion 22 is supported by a support bracket 15 located obliquely rearward and leftward of the drive wheel speed detection sensor 200 that is mounted on the rear upper surface of the right outer peripheral wall 31Lb of the power transmitting case 31L. The support bracket 15 projects obliquely rearward and upward from a rear curved portion 31Lr on the upper surface of the left outer peripheral wall 31La of the power transmission case 31L.

The support bracket 15 includes a front base 15Fb and a rear base 15Rb that are positioned respectively on front and rear areas of the rear curved portion 31Lr on the upper surface of the left outer peripheral wall 31La of the power transmission case 31L, a tip-end pivot support 15C by which the rear cushion 22 is pivotally supported, and a front support post 15F and a rear support post 15R that extend respectively from the front base 15Fb and the rear base 15Rb to the tip-end pivot support 15C.

As depicted in FIGS. 4 through 6, the front support post 15F extends straight obliquely rearward and upward from the front base 15Fb to the tip-end pivot support 15C.

The rear base 15Rb is positioned behind the front base 15Rb at a lower portion of the rear end of the rear curved portion 31Lr on the upper surface of the left outer peripheral wall 31La of the power transmission case 31L. The rear support post 15R interconnects the rear base 15Rb and the tip-end pivot support 15C, which is positioned substantially upward of the rear base 15Rb, through a bent portion 15Rc that is bent rearward.

The rear base 15Rb is integrally formed with a side wall 31Lc, i.e., a bearing wall, protruding rearward from the left outer peripheral wall 31La to the right outer peripheral wall 31Lb. The portion of the rear support post 15R that extends from the rear base 15R up to the bent portion 15Rc is formed as a ridge on the side wall 31Lc (see FIG. 6).

Therefore, the rear support post 15R is of high rigidity and excellent mechanical strength.

The support bracket 15 has a lightened thin triangular vertical wall 15W extending between the front support post 15F and the rear support post 15R.

The tip-end pivot support 15C of the support bracket 15 has a bearing hole defined therein. The rear cushion 22 has a rod 22r including a channel-shaped cushion bracket 22b on its lower end which is placed astride of the tip-end pivot support 15C. The channel-shaped cushion bracket 22b has a bearing hole defined therein in alignment with the bearing hole in the tip-end pivot support 15C. A support bolt 16 is inserted through the bearing hole in the channel-shaped cushion bracket 22b and the bearing hole in the tip-end pivot support 15C, so that the lower end of the rod 22r of the rear cushion 22 is pivotally supported on the tip-end pivot support 15C of the support bracket 15 by the cushion bracket 22b and the support bolt 16.

As depicted in FIG. 4, the support bracket 15 that supports the rear cushion 22 projects from the rear curved portion 31Lr on the upper surface of the left outer peripheral wall 31La of the power transmission case 31L and is located obliquely rearward and leftward of the drive wheel speed detection sensor 200 mounted on the rear upper surface of the right outer peripheral wall 31Lb of the power transmission case 31L.

The rear support post 15R of the support bracket 15 extends along the side wall 31Lc of the power transmitting case 31L from the rear base 15Rb up to the bent portion 15Rc. As depicted in FIG. 5 showing the motorcycle 1 in fragmentary rear elevation, the support bracket 15 has a right side portion 15z adjacent to the rear wheel 21, which covers part of the drive wheel speed detection sensor 200 from behind.

As depicted in FIG. 5, the rear fender 17 is positioned rearward and rightward of the drive wheel speed detection sensor 200. Part of the drive wheel speed detection sensor 200 is visible between the rear fender 17 and the support bracket 15 as the motorcycle 1 is viewed in rear elevation.

As depicted in FIG. 6, showing the power unit 20 in left-hand side elevation, the front support post 15F of the support bracket 15 is positioned in covering relation to part of the drive wheel speed detection sensor 200 as viewed in left-hand side elevation.

As depicted in FIG. 4, a protective cover 170 in the form of a plate that is elongate in the forward and rearward directions is mounted in an upstanding posture on an upper wall of the power transmitting case cover 81 that covers the left side of the power transmitting case 31L.

The protective cover 170 is joined to a rear end portion of the side duct cover 84, extending obliquely rearward and upward from the side duct cover 84 that covers the front side of the power transmitting case cover 81. The protective cover 170 extends rearward along the upper wall of the power transmitting case cover 81, and has front and rear portions fastened to the power transmitting case cover 81 by bolts 171a and 171b (see FIG. 4).

The power transmitting case cover 81 has a rear portion covering the periphery of the centrifugal clutch 100 and expanding vertically into upper and lower curved portions. The protective cover 170 includes a rear curved portion 170r that overlaps the upper curved portion of the power transmitting case cover 81 (see FIG. 4).

The protective cover 170 includes a vertical wall 170v extending upward from the upper side of the rear curved portion 170r and also extending in the forward and rearward directions.

The protective cover 170 has a front portion including an upper wall surface 170u that is elongate in the forward and rearward directions. The upper wall surface 170u is positioned obliquely forward and upward of the rear curved portion 170r. The front portion of the protective cover 170 also includes a rear inclined surface 170s extending along an inclined front side of the rear curved portion 170r below the upper wall surface 170u.

The upper wall surface 170u is tilted differently as the power unit 20 swings. Generally, the upper wall surface 170u is inclined rearward and downward as when the motorcycle 1 is kept at rest as depicted in FIG. 2.

The air cleaner 26 is disposed above the power transmitting case 31L and the power transmitting case cover 81.

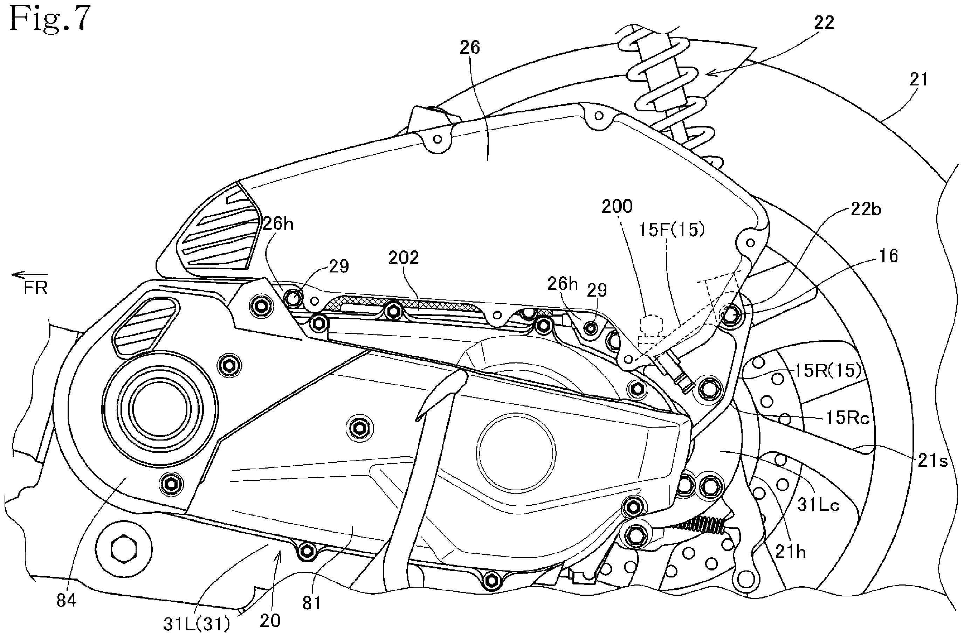

As depicted in FIG. 7, a plurality of support lugs 26h that project from a lower surface of the air cleaner 26 are fastened to an upper edge of the power transmitting case 31L by respective bolts 29, thereby installing the air cleaner 26 on the power transmitting case 31L and placing the air cleaner 26 above the power transmitting case 31L and the power transmitting case cover 81.

As illustrated in FIG. 7 showing the motorcycle 1 in left-hand side elevation, there is a gap between upper surfaces of the power transmitting case 31L and the power transmitting case cover 81 and a lower surface of the air cleaner 26. As shown, the sensor harness 202 extending from the coupler 200c of the drive wheel speed detection sensor 200 is visible through the gap.

As depicted in FIG. 2, the protective cover 170 covers the left side of the gap between the upper surfaces of the power transmitting case 31L and the power transmitting case cover 81 and the lower surface of the air cleaner 26.

As FIG. 2 shows, rainwater, etc. applied to the outer side surface of the air cleaner 26 flows downward and enters a clearance between the air cleaner 26 and the upper side of the protective cover 170, flowing down the upper wall surface 170u of the front portion of the protective cover 170 and the rear curved portion 170r of the rear portion thereof.

Since the water flowing down the upper wall surface 170u, which is inclined rearward and downward, of the front portion of the protective cover 170, flows rearward and down the rear curved portion 170r, most of the water applied to the outer side surface of the air cleaner 26 flows down the rear curved portion 170r.

The water flowing down the rear curved portion 170r flows rearward and forward on the curved upper surface of the rear curved portion 170r, reaches the power transmitting case cover 81, and flows down the outer side surface thereof before it is drained off.

Deposits flowing with the water are also drained off.

As illustrated in FIG. 5, the air cleaner 26 includes a purification chamber case 26R that defines a right purification chamber and a non-purification chamber case 26L that defines a left non-purification chamber, the purification chamber case 26R and the non-purification chamber case 26L being combined with each other with an air cleaner element interposed therebetween.

The left non-purification chamber case 26L of the air cleaner 26 covers the upper side of the power transmitting case cover 81, as depicted in FIG. 5, and bulges rearward to cover the left side of the front support post 15F of the support bracket 15, as depicted in FIG. 7 showing the motorcycle 1 in left-hand side elevation.

The right purification chamber case 26R of the air cleaner 26 bulges rightward in front of the rear cushion 22 closely to the rear wheel 21, as depicted in FIG. 5 showing the motorcycle 1 in rear elevation, covering the upper side of the drive wheel speed detection sensor 200 that is mounted on the rear upper surface of the right outer peripheral wall 31Lb of the power transmitting case 31L.

The structure for protecting the drive wheel speed detection sensor mounted on the power unit according the embodiment of the present invention as described in detail above offers the following advantages:

As depicted in FIG. 5, since the right side portion 15z, near the rear wheel 21, of the support bracket 15 for the rear cushion 22 which projects on the rear portion of the power transmitting case 31L is disposed in a position where it covers, from behind, part of the drive wheel speed detection sensor 200 inserted in and projecting from the portion, above the rear axle 115, of the power transmitting case 31L, the support bracket 15 protects the drive wheel speed detection sensor 200 from external forces caused by impact of foreign matter, etc. from behind.

As the support bracket 15 for supporting the rear cushion 22 is used to protect the drive wheel speed detection sensor 200 from external forces from behind, the number of parts used is reduced, making the cost of the structure low and preventing the vehicle body from increasing its weight.

The rear fender 17 also protects the drive wheel speed detection sensor 200 from impact of foreign matter, etc. from behind.

As depicted in FIG. 6, inasmuch as the support bracket 15 covers a part of the drive wheel speed detection sensor 200 sideways as the motorcycle 1 is viewed in side elevation, the support bracket 15 protects the drive wheel speed detection sensor 200 from impact of foreign matter, etc. sideways.

According to the present embodiment, as the left side of the support bracket 15 is covered by the air cleaner 26, the air cleaner 26 protects the support bracket 15 from external forces caused by impact of foreign matter, etc. from the left side.

As shown in FIG. 6, the support bracket 15 includes the front base 15Fb and the rear base 15Rb that are spaced from each other in the forward and rearward directions near the power transmitting case 31L, the tip-end pivot support 15C by which the rear cushion 22 is pivotally supported, and the front support post 15F and the rear support post 15R that extend respectively from the front base 15Fb and the rear base 15Rb to the tip-end pivot support 15C. Therefore, the support bracket 15 is able to reduce shearing loads applied thereto with the front support post 15F and the rear support post 15R that make up sides of a substantially triangular shape, firmly bearing spring forces from the rear cushion 22, and is made lightweight by a lightened wall or space between the front support post 15F and the rear support post 15R.

As depicted in FIGS. 4 and 6, the support bracket 15 projects obliquely rearward and upward from the rear curved portion 31Lr of the upper surface of the left outer peripheral wall 31La of the power transmitting case 31L, and the rear support post 15R interconnects the rear base 15Rb on the rear curved portion 31Lr of the power transmitting case 31L and the tip-end pivot support 15C through the bent portion 15Rc that is bent rearwardly. Consequently, the support bracket 15 is positioned as rearward as possible while keeping low shearing loads applied thereto, increasing the distance between itself and the drive wheel speed detection sensor 200 positioned in front thereof. Even if the support bracket 15 is deformed by impact of foreign matter from behind, it does not adversely affect the drive wheel speed detection sensor 200.

As shown in FIG. 2, because the air cleaner 26 is disposed above the power transmitting case 31L, and the gap between the power transmitting case 31L and the air cleaner 26 is covered sideways with the protective cover 170 as the motorcycle 1 is viewed in side elevation, the drive wheel speed detection sensor 200 and the sensor harness 202 that are visible sideways between the power transmitting case 31L and the air cleaner 26 are covered sideways by the protective cover 170. The protective cover 170 prevents foreign matter from entering sideways between the power transmitting case 31L and the air cleaner 26, thereby protecting the drive wheel speed detection sensor 200 and the sensor harness 202.

As depicted in FIG. 5, the air cleaner 26 bulges over the drive wheel speed detection sensor 200, so that the air cleaner 26 protects the drive wheel speed detection sensor 200 from impact of foreign matter and rainwater from above.

When a theft-prevention U-lock is placed on the rear wheel 21 between spokes 21s thereof for theft prevention while the motorcycle 1 is at rest, and then the motorcycle 1 is moved with the U-lock still on the rear wheel 21, the U-lock is lifted while its end engaging the rear wheel 21 is sliding on one of the spokes 21s and approaching a wheel hub 21h and its free end is dropping downward. The engaging end of the U-lock obliquely hits the rear surface of a support post portion of the rear support post 15R of the support bracket 15 which is positioned outside of the wheel hub 21h and closer to the tip-end pivot support 15C than the bent portion 15Rc, and then moves away by sliding upward on the rear surface of the support post portion. The impact force from the engaging end of the U-lock is thus absorbed, making the impact small. The U-lock does not directly hit the drive wheel speed detection sensor 200, and hence the support bracket 15 is able to protect the drive wheel speed detection sensor 200.

The air cleaner 26 that is positioned forwardly of the rear support post 15R of the support bracket 15 is also protected from impact of the U-lock (see FIG. 2).

Even if the engaging end of the U-lock goes beyond the tip-end pivot support 15C by sliding upward on the rear support post 15R of the support bracket 15, the engaging end hits the lower end of the rear cushion 22, but is prevented from moving further forward. Therefore, the drive wheel speed detection sensor 200 and the air cleaner 26 are protected.

The structure or device for protecting the drive wheel speed sensor for the power unit according to the embodiment of the present invention has been described above. The present invention is not limited to the above embodiment, but various changes and modifications may be made therein without departing from the scope of the invention.

For example, the vehicle used in the present invention is not limited to the saddle-type motorcycle 1 according to the illustrated embodiment, but may be any of various types of saddle-type vehicles including scooter-type vehicles, three- or four-wheeled buggies, etc., insofar as they are vehicles with requirements defined in the claims.

### Description of Reference Symbols

1···Scooter-type motorcycle, 2···Vehicle body frame, 3···Head pipe, 4···Main frame, 5···Seat rail, 6···Down tube, 7···Back stay, 8···Bracket, 9···Link, 10···Steering column, 11···Front fork, 12···Front wheel, 13···Handlebar, 15···Support bracket, 15F···Front support post, 15Fb···Front base, 15R···Rear support post, 15Rc···Bent portion, 15Rb···Rear base, 15C···Tip-end pivot support, 16···Support bolt, 17···Rear fender,
20···Power unit, 21···Rear wheel, 22···Rear cushion, 23···Intake pipe, 24···Injector, 25···Throttle body, 26···Air cleaner, 27···Exhaust pipe, 28···Muffler, 29···Bolt,
30···Internal combustion engine, 31···Crankcase, 31L···Power transmitting case (left crankcase member), 31La···Left outer peripheral wall, 31Lb···Right outer peripheral wall, 31Lr···Rear curved portion, 31R···Right crankcase member, 31b···Mount boss,
32···Cylinder block, 33···Cylinder head, 34···Cylinder head cover, 37···Fuel tank, 38···Seat, 40···Crankshaft, 42···Piston, 43···Connecting rod, 44···Cam chain drive sprocket,
50···Valve operating mechanism, 51···Cam chain, 52···Cam chain chamber, 53···Camshaft, 55···Cam chain driven sprocket, 65···Partition, 66···Bolt, 67···Bolt,
70···AC generator, 71···ACG boss, 72···Outer rotor, 73···Inner stator, 74···Radiator fan, 76···Radiator cover, 77···Fan cover,
80···Belt-type continuously variable transmission, 81···Power transmitting case cover, 82···Centrifugal weight, 83···Guide plate, 84···Side duct cover, 84d···Duct cover, 85···Drive pulley, 85s···Fixed pulley cone, 85d···Movable pulley cone, 89···V-belt, 90···Driven pulley, 90s···Fixed pulley cone, 90d···Movable pulley cone, 92···Fixed pulley support sleeve, 93···Movable pulley support sleeve, 94···Guide pin, 100···Centrifugal clutch, 101···Driven shaft, 102···Inner clutch member, 105···Outer clutch member, 107, 108···Bearing,
110···Speed reducer gear mechanism, 111···Speed reducer gear cover, 112···Speed reducer intermediate shaft, 112g···Small-diameter gear, 113···Large-diameter intermediate gear, 114···Large-diameter rear axle gear, 115···Rear axle,
131···Right rear fork member, 132···Rear cushion, 135···Support bracket,
160···Protective cover, 170···Protective cover, 170r···Rear curved portion, 170u···Upper wall surface, 171a, 171b···Bolt,
200...Drive wheel speed detection sensor, 200c···Coupler, 201···Bolt, 202···Sensor harness

## Claims

1. A vehicle with a structure for protecting a drive wheel speed sensor for a power unit (20) mounted on said vehicle in which a power transmitting case (31L) extending rearward from a crankcase (31) of an internal combustion engine and a power transmitting case cover (81) house therebetween a continuously variable transmission (80), and a drive wheel (21) is fitted on a rear axle (115) driven through said continuously variable transmission (80) and rotatably supported on a rear portion of said power transmitting case (31L), so as to project sideways, wherein said crankcase (31) has a front portion swingably supported on a vehicle body frame (2) of the vehicle, a rear cushion (22) is interposed between a support bracket (15) projecting on a rear portion of said power transmitting case (31L) and a rear portion of said vehicle body frame (2), and a drive wheel speed detection sensor (200) for detecting rotational speed of said drive wheel (21) is inserted in and projects from a portion of said power transmitting case (31L) above said rear axle (115): **characterized in that**:
said support bracket (15) is positioned to project in a position to cover at least a part of said drive wheel speed detection sensor (200) from behind as the vehicle is viewed in rear elevation.

2. The vehicle according to claim 1, wherein said support bracket (15) has a side portion (15z) adjacent to said drive wheel (21), and the side portion (15z) is positioned to cover a part of said drive wheel speed detection sensor (200) as the vehicle is viewed in rear elevation.

3. The vehicle according to claim 1 or 2, wherein said support bracket (15) covers at least a part of said drive wheel speed detection sensor (200) sideways as the vehicle is viewed in side elevation.

4. The vehicle according to claim 3, wherein said support bracket (15) includes a front base (15Fb) and a rear base (15Rb) on said power transmitting case (31L), spaced from each other in forward and rearward directions of the vehicle, a tip-end pivot support (15C) by which said rear cushion (22) is pivotally supported, and a front support post (15F) and a rear support post (15R) extending respectively from said front base (15Fb) and said rear base (15Rb) to said tip-end pivot support (15C).

5. The vehicle according to claim 4, wherein said support bracket (15) projects obliquely rearward and upward from a rear curved portion (31Lr) of said power transmitting case (31L); and
said rear support post (15R) interconnects said rear base (15Rb) on the rear curved portion (31Lr) of said power transmitting case (31L) and said tip-end pivot support (15C) through a bent portion (15Rc) bent rearward.

6. The vehicle according to any one of claims 1 through 5, wherein:
an air cleaner (26) is disposed above said power transmitting case (31L) with a gap therebetween; and
the gap between said power transmitting case (31L) and said air cleaner (26) is covered sideways with a protective cover (170) as the vehicle is viewed in side elevation.

7. The vehicle according to claim 6, wherein said air cleaner (26) bulges over said drive wheel speed detection sensor (200).

## Patentansprüche

1. Fahrzeug mit einer Anordnung, um einen Antriebsrad-Geschwindigkeitssensor für eine am Fahrzeug befestigte Antriebseinheit (20) zu schützen, wobei ein Leistungsübertragungsgehäuse (31L), das von einem Kurbelwellengehäuse (31) eines Verbrennungsmotors nach hinten verläuft, und eine Leistungsübertragungsgehäuseabdeckung (81) dazwischen ein stufenloses Getriebe (80) aufnehmen, und ein Antriebsrad (21) an einer hinteren Achse (115) eingesetzt ist, die durch das stufenlose Getriebe (80) angetrieben wird und rotierbar an einem hinteren Bereich des Leistungsübertragungsgehäuses (31L) gehalten wird, um so zur Seite hervorzustehen, wobei das Kurbelwellengehäuse (31) einen vorderen Bereich hat, der schwingbar an einem Fahrzeugkarosserierahmen (2) des Fahrzeugs gehalten wird, eine hintere Dämpfung (22) zwischen einem Haltebügel (15), der an einem hinteren Bereich des Leistungsübertragungsgehäuses (31L) und einem hinteren Bereich des Fahrzeugkarosserierahmens (2) hervorsteht, und ein Antriebsrad-Geschwindigkeitserfassungssensor (200), um eine Rotationsgeschwindigkeit des Antriebsrads (22) zu erfassen, eingesetzt ist und von einem Bereich des Leistungsübertragungsgehäuses (31L) über der Hinterachse (115) hervorsteht;
**dadurch gekennzeichnet, dass**:
der Haltebügel (15) angeordnet ist, um in einer Position hervorzustehen, um wenigstens einen Teil des Antriebsrad-Geschwindigkeitserfassungssensors (200) von hinten in der Ansicht des Fahrzeugs von hinten abzudecken.

2. Fahrzeug nach Anspruch 1, wobei der Haltebügel (15) einen Seitenabschnitt (15z) angrenzend an das Antriebsrad (21) hat, und der Seitenabschnitt (15z) angeordnet ist, um einen Teil des Antriebsrad-Geschwindigkeitserfassungssensors (200) in der Ansicht des Fahrzeug von hinten abzudecken.

3. Fahrzeug nach Anspruch 1 oder 2, wobei der Haltebügel (15) wenigstens einen Teil des Antriebsrad-Geschwindigkeitserfassungssensors (200) in der Seitenansicht des Fahrzeugs betrachtet seitlich abdeckt.

4. Fahrzeug nach Anspruch 3, wobei der Haltebügel (15) eine vordere Basis (15Fb) und eine hintere Basis (15Rb) am Leistungsübertragungsgehäuse (31L) aufweist, die voneinander in der Fahrzeugrichtung nach vorne und nach hinten beabstandet sind, eine Schwenkhalterung (15C) am Spitzenende, durch die der hintere Dämpfer (22) schwenkbar gehalten wird, und ein vorderer Haltepfosten (15F) und ein hinter Haltepfosten (15R), die jeweils von der vorderen Basis (15Fb) und der hinteren Basis (15Rb) zur Schwenkhalterung (15C) am Spitzenende verlaufen.

5. Fahrzeug nach Anspruch 4, wobei der Haltebügel (15) schräg nach hinten und oben von einem hinteren gebogenen Bereich (31Lr) des Leistungsübertragungsgehäuses (31L) hervorsteht; und
wobei der hintere Haltepfosten (15R) die hintere Basis (15Rb) am hinteren gebogenen Bereich (31Lr) des Leistungsübertragungsgehäuses (31L) und der Schwenkhalterung (15C) am gebogenen Spitzenende durch einen nach hinten gebogenen gebogenen Bereich (15Rc) verbindet.

6. Fahrzeug nach einem der Ansprüche 1 bis 5, wobei:
ein Luftfilter (26) über dem Leistungsübertragungsgehäuse (31L) mit einem Abstand dazwischen angeordnet ist; und
der Abstand zwischen dem Leistungsübertragungsgehäuse (31L) und dem Luftfilter (26) seitlich mit einer Schutzverkleidung (170) in der Seitenansicht des Fahrzeugs betrachtet verkleidet ist.

7. Fahrzeug nach Anspruch 6, wobei sich der Luftfilter (26) über den Antriebsrad-Geschwindigkeitserfassungssensor (200) hervorwölbt.

## Revendications

1. Véhicule avec une structure pour la protection d'un capteur de vitesse de roue d'entraînement pour une unité de puissance (20) montée sur ledit véhicule dans lequel un boîtier de transmission de puissance (31L) s'étendant vers l'arrière depuis un carter-moteur (31) d'un moteur à combustion interne et un couvercle de boîtier de transmission de puissance (81) logent entre eux une transmission variable en continu (80), et une roue d'entraînement (21) est insérée sur un essieu arrière (115) entraîné au travers de ladite transmission variable en continu (80) et supporté de manière à pouvoir tourner sur une portion arrière dudit boîtier de transmission de puissance (31L), de sorte à faire saillie latéralement, dans lequel ledit carter-moteur (31) présente une portion avant supportée de manière oscillante sur un cadre de corps de véhicule (2) du véhicule, un coussin arrière (22) est interposé entre une patte de support (15) faisant saillie sur une portion arrière dudit boîtier de transmission de puissance (31L) et une portion arrière dudit cadre de corps de véhicule (2), et un capteur de détection de vitesse de roue d'entraînement (200) pour la détection d'une vitesse de rotation de ladite roue d'entraînement (21) est inséré dans et fait saillie d'une portion dudit boîtier de transmission de puissance (31L) au-dessus dudit essieu arrière (115) ; **caractérisé en ce que** :
ladite patte de support (15) est positionnée pour faire saillie dans une position pour couvrir au moins une partie dudit capteur de détection de vitesse de roue d'entraînement (200) de derrière lorsque le véhicule est vu en élévation arrière.

2. Véhicule selon la revendication 1, dans lequel ladite patte de support (15) présente une portion latérale (15z) adjacente à ladite roue d'entraînement (21), et la portion latérale (15z) est positionnée pour couvrir une partie dudit capteur de détection de vitesse de roue d'entraînement (200) lorsque le véhicule est vu en élévation arrière.

3. Véhicule selon la revendication 1 ou 2, dans lequel ladite patte de support (15) couvre au moins une partie dudit capteur de détection de vitesse de roue d'entraînement (200) latéralement lorsque le véhicule est vu en élévation latérale.

4. Véhicule selon la revendication 3, dans lequel ladite patte de support (15) comporte une base avant (15Fb) et une base arrière (15Rb) sur ledit boîtier de transmission de puissance (31L), espacées l'une de l'autre dans des directions vers l'avant et vers l'arrière du véhicule, un support de pivot d'extrémité de bout (15C) par lequel ledit coussin arrière (22) est supporté de manière pivotante, et un montant de support avant (15F) et un montant de support arrière (15R) s'étendant respectivement de ladite base avant (15Fb) et ladite base arrière (15Rb) audit support de pivot d'extrémité de bout (15C).

5. Véhicule selon la revendication 4, dans lequel ladite patte de support (15) fait saillie en oblique vers l'arrière et vers le haut depuis une portion courbée arrière (31Lr) dudit boîtier de transmission de puissance (31L) ; et
ledit montant de support arrière (15R) raccorde ladite base arrière (15Rb) sur la portion courbée arrière (31Lr) dudit boîtier de transmission de puissance (31L) et ledit support de pivot d'extrémité de bout (15C) au travers d'une portion pliée (15Rc) pliée vers l'arrière.

6. Véhicule selon l'une quelconque des revendications 1 à 5, dans lequel :
un épurateur d'air (26) est disposé au-dessus dudit boîtier de transmission de puissance (31L) avec une fente entre eux ; et
la fente entre ledit boîtier de transmission de puissance (31L) et ledit épurateur d'air (26) est couverte latéralement avec un couvercle protecteur (170) lorsque le véhicule est vu en élévation latérale.

7. Véhicule selon la revendication 6, dans lequel ledit épurateur d'air (26) gonfle sur ledit capteur de détection de vitesse de roue d'entraînement (200).
